# EUROPÄISCHE PATENTSCHRIFT

(11) **EP 0 915 327 B1**
(45) Veröffentlichungstag und Bekanntmachung des Hinweises auf die Patenterteilung: **27.02.2002**
(21) Anmeldenummer: 98111579.3
(22) Anmeldetag: 24.06.1998
(51) Int. Cl.: G01L 23/10, G01L 19/06, G01L 9/00

(54) **Drucksensor**
Pressure sensor
Capteur de pression

(30) Priorität: 04.11.1997 DE 19748578
(43) Veröffentlichungstag der Anmeldung: 12.05.1999
(73) Patentinhaber: ROBERT BOSCH GMBH, 70442 Stuttgart (DE)
(72) Erfinder: Giersch, Rolf-Juergen, 71735 Eberdingen (DE); Scharf, Michael, 38302 Wolfenbuettel (DE); Fischer, Joerg-Peter, 73779 Deizisau (DE)

(56) Entgegenhaltungen:
- US-A- 3 801 838
- US-A- 5 168 192
- US-A- 5 488 868

## Beschreibung

### Stand der Technik

Die Erfindung geht aus von einem Drucksensor nach der Gattung des Hauptanspruchs. Bei einem derartigen, z.B. aus der DE-A-43 03 011 bekannten Drucksensor ist der Boden des Sensorgehäuses als Druckübertragungselement ausgebildet. Das Sensorgehäuse weist ein Innengewinde auf, in welches ein Stempel eingeschraubt ist, welcher das Meßelement zur Druckübertragung mit Vorspannung auf den Boden drückt. Die Höhe dieser Vorspannung ist entscheidend für die Funktion des Drucksensors und wird vorab eingestellt. Bei zu hoher oder zu niedriger Vorspannung des Meßelements besteht die Gefahr, daß die Meßkurve nicht linear ist. Außerdem wirkt sich eine zu hohe bzw. zu niedrige Vorspannung negativ auf die Dauerfestigkeit des Meßelements und des Bodens aus. Verdreht sich der verschraubte Stempel beabsichtigt oder unbeabsichtigt aus seiner definierten Einstellposition, ändert sich auch die Vorspannung, welche auf das Meßelement und den Boden wirkt. Zudem finden unter den hohen Drücken im Einspritzsystem in den Gewindegängen Setzvorgänge statt, wodurch die Vorspannung mit der Zeit nachläßt.

Schließlich ist aus der europäischen Patentschrift EP 0 400 060 eine Meßeinrichtung zur Erfassung eines Druckes bekannt, bei welcher die Vorspannung auf das Meßelement ebenfalls durch lösbare formschlüssige Verbindungen erzeugt wird. Wie bei der Verschraubung finden auch an Trennfugen dieser Verbindungen mit der Zeit Setzvorgänge statt, welche die Vorspannkraft auf das Meßelement verringern.

Ein Drucksensor gemäss der Gattung des Patentanspruchs 1 ist ferner durch die US-A-5168192 bekannt. Dort ist der Boden des Gehäuses des Drucksensors einstückig Teil eines topfförmigen Gehäuseteils, in das das Druckübertragungselement und der Meßelementträger eingesetzt sind und dort mittels Verschweißung mit diesem verbunden ist. Das topfförmige Gehäuseteil ist dabei in ein hülsenförmiges Gehäuserückteil eingesetzt und kommt mit einem Außenflansch an der Stirnseite des Gehäuserückteils zur Anlage. Dieses ist per Verschraubung in die Durchgangsbohrung eingesetzt, so dass das Gehäusevorderteil freistehend und beabstandet von der Durchgangsbohrung dem in diesem vorhandenen Druckmedium ausgesetzt ist. Hierbei übernimmt allein das Schraubgewinde des Gehäuserückteils die Abdichtung nach außen. Eine solche Abdichtung ist für den Einsatz bei weniger hohen Gasdrücken realisiert, wie sie bei einer Brennkraftmaschine im Brennraum auftreten.

Der Erfindung liegt die Aufgabe zugrunde, einen Drucksensor zu schaffen, der den hohen Drücken, die im Pumpenarbeitsraum einer Kraftstoffeinspritzpumpe herrschen, standhält und mit hoher Meßgenauigkeit arbeitet.

Diese Aufgabe wird erfindungsgemäß durch die Merkmale des Patentanspruchs 1 gelöst. Der erfindungsgemäße Drucksensor hat gegenüber dem Stand der Technik den Vorteil, dass er den Pumpenarbeitsraum hochdruckfest abdichtet und in die Wand der Kraftstoffeinspritzpumpe eingesetzt ist, wobei er eine hohe Meßgenauigkeit bei hoher Lebensdauer bereitstellt.

Da der Meßkopf ausschließlich über seinen Außenflansch in der Durchgangsbohrung der Wandung gelagert ist, läuft der Kraftfluß der Einspannkräfte hauptsächlich über den Außenflansch, wodurch sich den auf die Membran und auf das Meßelement wirkenden Vorspannkräften keine zusätzlichen Einspannkräfte überlagern, so daß auch hierdurch eine Veränderung der Vorspannung gezielt vermieden wird. Zudem stellt der Meßkopf eine separate Baugruppe dar, welche als Vormontagegruppe kostengünstig hergestellt werden kann.

Durch die in den abhängigen Patentansprüchen aufgeführten Maßnahmen sind vorteilhafte Weiterbildungen des im unabhängigen Anspruch 1 angegebenen Drucksensors möglich.

### Zeichnungen

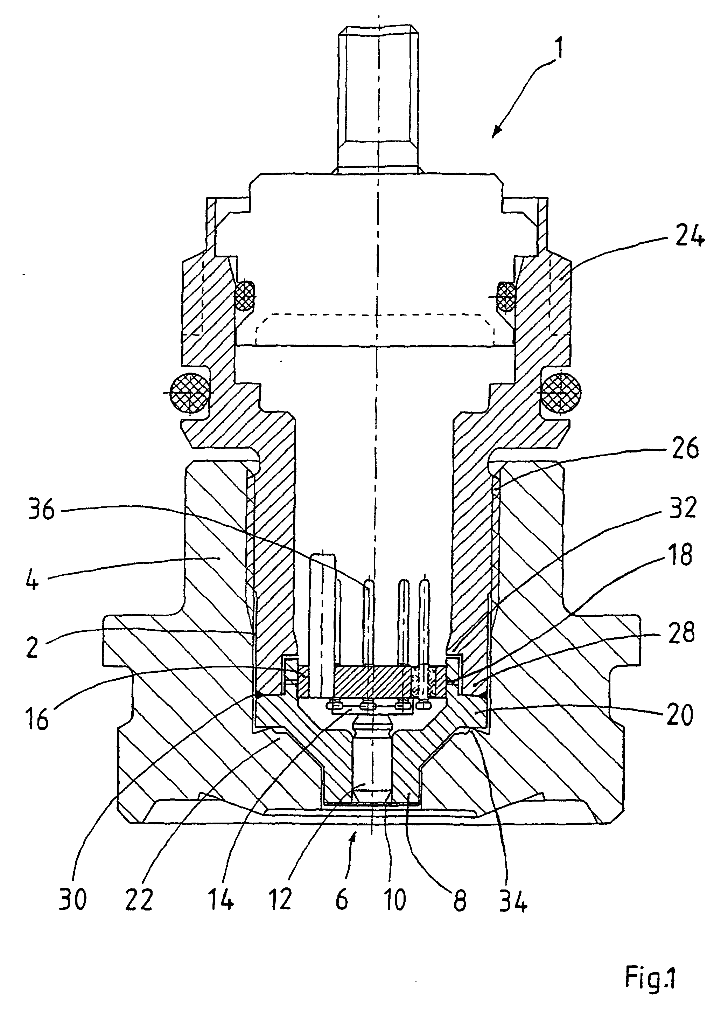

Ein Ausführungsbeispiel der Erfindung ist in der Zeichnung dargestellt und in der nachfolgenden Beschreibung näher erläutert. Es zeigt Fig.1 einen Längsschnitt durch ein bevorzugtes Ausführungsbeispiel gemäß der Erfindung.

### Beschreibung des Ausführungsbeispiels

Die in Fig.1 dargestellte bevorzugte Ausführungsform eines Drucksensors 1 gemäß der Erfindung ist in eine Durchgangsbohrung 2 einer Zentralverschlußschraube 4 einer bekannten Verteilereinspritzpumpe eingebaut, welche nicht dargestellt ist. Die zum Druckmedium weisende Seite des Drucksensors 1 weist einen Meßkopf 6 auf, welcher in einem separaten Gehäusevorderteil 8 des Drucksensors 1 angeordnet und in Druckübertragungsrichtung gesehen eine Membran 10, einen Druckbolzen 12, ein Meβelement 14 und einen Meßelementträger 16 beinhaltet. Der Meßelementträger ist vorzugsweise eine zylindrische Metallplatte 16, deren radial äußerere Umfangsfläche derart mit der radial inneren Umfangsfläche des Gehäusevorderteils 8 verschweißt ist, daß das Meßelement 14, welches auf der zum Druckbolzen 12 weisenden Seite des Meßelementträgers 16 angeordnet ist, über den Druckbolzen 12 eine definierte Vorspannkraft auf die Membran 10 ausübt, wodurch sich die Membran 10 um ca. 5 µm zum Druckmedium hin durchbiegt. Aus der Größenordnung der Membrandurchbiegung ergibt sich, daß schon geringste geometrische Veränderungen im Meßkopf 6 die voreingestellte Vorspannkraft wesentlich ändern können, zumal die Membran 10 aufgrund der hohen Dauerbelastung relativ steif ausgeführt ist.

Die Membran 10 ist mit dem Gehäusevorderteil 8 verschweißt, wobei die Wanddicke der Membran 10 klein gegenüber der Wandddicke des Gehäusevorderteils 8 ist. Das Gehäusevorderteil 8 ist im Bereich der Schweißverbindung mit dem Meßelementträger 16 dünnwandig, so daß die beiden Teile durch eine Laserschweißung 18 miteinander verbindbar sind. Bedingt durch die Verschweißungen bildet der Meßkopf 6 eine nicht demontierbare Einheit, so daß die Vorspannung auf die Membran 10 weder beabsichtigt noch unbeabsichtigt verändert werden kann.

Am äußeren Umfang des Gehäusevorderteils 8 ist ein Außenflansch 20 angeordnet und zur Lagerung des Meßkopfes 6 in der Durchgangsbohrung 2 zwischen einen den Durchmesser der Durchgangsbohrung 2 verringernden Absatz 22 und ein in die Durchgangsbohrung 2 eingeschraubtes Gehäuserückteil 24 axial eingespannt. Dazu weist das Gehäuserückteil 24 in einem in Druckübertragungsrichtung gesehen hinteren Bereich ein in ein Innengewinde der Durchgangsbohrung 2 eingeschraubtes Außengewinde 26 auf, welches einen relativ großen axialen Abstand zum am vorderen Ende des Drucksensors 1 angeordneten Meßkopf 6 einhält. Durch diesen axialen Abstand wird gewährleistet, daß Einspannkräfte, welche entlang des Außengewindes 26 übertragen werden, nicht auf den Meßkopf 6 wirken.

Ein zum Meßkopf 6 hin weisendes Ende der Wand des Gehäuserückteils 24 ist derart stufenförmig ausgebildet, daß ein längeres Stufenteil 28 gegen den Außenflansch 20 des Gehäusevorderteils 8 verspannt und mit ihm an dessen radial äußerem Umfangsrand durch eine Verschweißung 30 verbunden ist, wobei das Gehäuserückteil 24 und das Gehäusevorderteil 8 einander in radialer Richtung mit radialem Abstand überlappen. Dabei umgibt der längere Stufenteil 28 den vom Außenflansch 20 zum Gehäuserückteil 24 ragenden Wandteil des Gehäusevorderteils. Ein kürzeres Stufenteil 32 des Wandendes des Gehäuserückteils 24 liegt der Stirnfläche des Gehäusevorderteils 8 mit axialem Abstand gegenüber. Gemäß der bevorzugten Ausführungsform ist der Auβenflansch 20 umlaufend, er kann aber auch aus einem oder mehreren Außenflansch-Abschnitten bestehen, welche am äußeren Umfang des Gehäusevorderteils 8 mit Umfangsabstand voneinander angeordnet sind.

Der Absatz 22 der Durchgangsbohrung 2 weist eine in Druckübertragungsrichtung weisende umlaufende Dichtschneide 34 auf, gegen welche der Außenflansch 20 des Gehäusevorderteils 8 verspannt ist. Da die im Einspritzsystem auftretenden Drücke sehr hoch sind, besteht die Dichtschneide 34 aus Metall und verformt sich unter der Einspannkraft elastisch und/oder plastisch. Dadurch finden die Verformungen aufgrund der Einspannkräfte an der Dichtschneide 34 und nicht am Außenflansch 20 des Gehäusevorderteils 8 statt. Die Dichtschneide 34 ist mit der Zentralverschlußschraube 4 vorzugsweise einstückig, es können aber auch separate Dichtelemente wie Dichtscheiben oder Einlegeringe verwendet werden.

Wie in Fig.1 zu erkennen ist, kontaktiert der Meßkopf 6 andere Bauteile des Drucksensors 1 und die Durchgangsbohrung 2 ausschließlich über die in Druckübertragungsrichtung weisenden Flächen des Auβenflansches 20, wodurch der Meßkopf 6 in der Durchgangsbohrung 2 der Zentralverschlußschraube 4 eingespannt gelagert ist. Demgegenüber weisen alle sonstigen Außenflächen des Meßkopfes 6 einen Abstand zu angrenzenden Flächen anderer Bauteile auf. Hierdurch ist ebenfalls sichergestellt, daß der Meßkopf 6 und insbesondere die Vorspannung der Membran 10 durch keine Einspann- oder Lagerkräfte beeinflußt wird. Denn der Kraftfluß der Einspannkräfte läuft vom Außengewinde 26 über den längeren Stufenteil 28 des Gehäuserückteils 24 und über den Außenflansch 20 in den Absatz 22 der Durchgangsbohrung 2 und damit um die vorgespannte Membran-Druckbolzen-Meßelement-Anordnung herum. Da das kürzere Stufenteil 32 des Gehäuserückteils 24 der Stirnfläche des Gehäusevorderteils 8 mit axialem Abstand gegenüberliegt, können über diese Flächen ebenfalls keine Einspannkräfte übertragen werden. Dasselbe trifft auch für die radialen Umfangsflächen im Bereich der Überlappung des Gehäuserückteils 24 mit dem Gehäusevorderteil 8 zu, da diese Flächen mit radialem Abstand zueinander angeordnet sind.

Wie aus den bisherigen Ausführungen hervorgeht, ist das Gehäuse des Drucksensors gemäß der bevorzugten Ausführungsform zweiteilig und besteht aus dem den Meßkopf 6 bildenden Gehäusevorderteil 8 und dem dieses einspannende Gehäuserückteil 24. Dadurch kann die Werkstoffwahl und die Dimensionierung für die beiden Gehäuseteile 8,24 separat den unterschiedlichen Anforderungen angepaßt werden. So ist die Wandstärke des Gehäuserückteils 24 gegenüber der des Gehäusevorderteils 8 relativ groß, um einerseits am Gehäuserückteil 24 ein hohes Einschraubmoment aufbringen zu können und um andererseits das Gehäusevorderteil 8 von außen bis zum Meßelementträger 16 durchschweißen zu können. Zum andern erlaubt die Aufteilung des Gehäuses in zwei Teile, daß der separate Meßkopf 6 beliebig kurz ausgeführt werden kann. Dadurch ist der Druckbolzen 12 ebenfalls kurz mit entsprechend geringer Masse, was hinsichtlich der hohen Druckbeschleunigungen, denen er ausgesetzt ist, zu geringeren Trägheitskräften und zu einer geringeren Schwingungsanregung des Meßsystems führt. Zudem bewirkt ein kurzer Druckbolzen 12 eine steifere Übetragung der Druckstösse von der Membran 10 zum Meßelement 14.

Solche Drucksensoren 1 lassen sich mit Vorzug bei der Druckmessung in Verteilereinspritzpumpen von Kraftstoffeinspritzsystemen sowie bei der Verbrennungsdruckmessung in Diesel- oder Ottomotoren einsetzen. Bei der Verwendung in Verteilereinspritzpumpen wird mittels des Drucksensors 1 der momentane Druck im Pumpenarbeitsraum erfaßt und daraus der Förderbeginn und das Förderende der Pumpe festgelegt. Aus diesen Parametern kann dann die Föderdauer und die Fördermenge berechnet werden, welche als Eingangsgrößen für die Regel- und Steuerfunktionen des Einspritzsystems dienen.

Die Wirkungsweise des Drucksensors 1 ist hinlänglich bekannt und deshalb hier nur kurz erläutert. Die Erfassung des Drucks im Pumpenarbeitsraum der Kraftstoffeinspritzpumpe erfolgt über die vom Druck des Druckmediums in der Membran 10 erzeugte axiale Durchbiegung, welche mit Hilfe des Druckbolzens 12 gleichförmig auf das Meßelement 14 übertragen wird. Das Meßelement 14 enthält einen Chip, in welchem einerseits das Meßprinzip und andererseits die Auswertung der Meßdaten realisiert sind. Gemäß der bevorzugten Ausführungsform wird piezo-resistiv gemessen, wobei sich bei Druckbeaufschlagung der Membran 10 die Widerstandswerte innerhalb einer Vollbrückenschaltung ändern und die Meßsignale über aus dem Meßelementträger 16 ragende Meßkopfstifte 36 weitergeleitet werden. Da die Meßkopfstifte 36 durch die hintere Öffnung des Gehäuserückteils 24 von außen gut zugänglich sind, kann der Meßkopf 6 auch im eingebauten Zustand abgeglichen werden.

## Patentansprüche

1. Drucksensor (1) zur Erfassung des Drucks des Kraftstoffs eines von einer Wandung begrenzten Kraftstoffvolumens im Pumpenarbeitsraum einer Kraftstoffeinspritzpumpe, mit einem in einer Durchgangsbohrung (2) der Wandung angeordneten aus einem Gehäusevorderteil und einem Gehäuserückteil bestehenden Gehäuse (8, 24), welches gegenüber dem Kraftstoff-volumen durch einen Boden (10) abgeschlossen ist, an welchem auf einer dem Kraftstoff-volumen abgewandten Seite ein Druckübertragungselement (12) anliegt, so daß es im Betrieb den vom Kraftstoff auf den Boden (10) wirkenden Druck auf ein im Gehäuse (8) angeordnetes Meßelement (14) überträgt, und mit einem Meßelementträger (16), welcher mit dem Gehäusevorderteil (8) durch eine Verschweißung (18) verbunden ist und zusammen mit diesem, dem Meßelement (14) und dem Druckübertragungselement (12) einen in Druckübertragungsrichtung definiert vorgespannten und nicht demontierbaren Meßkopf (6) bildet, welcher über einen Außenflansch (20) des Gehäusevorderteils (8) am Gehäuserückteil (24) gehalten ist,
**dadurch gekennzeichnet,**
**dass** der Außenflansch (20) am äußeren Umfang des Gehäusevorderteils (8) angeordnet und zur Lagerung des Meßkopfes (6) in der Durchgangsbohrung (2) zwischen einem den Durchmesser der Durchgangsbohrung (2) verringernden, eine umlaufende Dichtschneide (34) aufweisenden Absatz (22) und dem in die Durchgangsbohrung (2) der Wandung eingeschraubten Gehäuserückteil (24) eingespannt ist und der Boden des Gehäusevorderteils (8) durch eine Membran (10) gebildet wird, die mit dem Gehäusevorderteil (8) verschweißt ist, wobei die Wanddicke der Membran (10) klein gegenüber der Wanddicke des Gehäusevorderteils (8) ist.

2. Drucksensor nach Anspruch 1,
**dadurch gekennzeichnet,**
**dass** das Gehäuserückteil (24) ein in ein Innengewinde der Durchgangsbohrung (2) eingeschraubtes Außengewinde (26) aufweist, welches mit axialem Abstand vom Meßkopf (6) angeordnet ist.

3. Drucksensor nach einem der Ansprüche 1 oder 2,
**dadurch gekennzeichnet,**
**dass** ein zum Meßkopf (6) weisendes Ende des Gehäuserückteils (24) derart stufenförmig ausgebildet ist, dass ein längeres Stufenteil (28) gegen den Außenflansch (20) des Gehäusevorderteils (8) verspannt und mit dem Außenflansch (20) an dessen radial äußerem Umfangsrand durch eine zweite Verschweißung (30) verbunden ist, wobei das Gehäuserückteil (24) und das Gehäusevorderteil (8) einander in radialer Richtung mit radialem Abstand überlappen, und ein kürzeres Stufenteil (32) des zum Meßkopf (6) weisendes Ende des Gehäuserückteils (24) der Stirnfläche des Gehäusevorderteils (8) mit axialem Abstand gegenüberliegt.

4. Drucksensor nach einem der vorhergehenden Ansprüche,
**dadurch gekennzeichnet,**
**dass** der Meßelementträger durch eine Metallplatte (16) gebildet ist, deren äußere Umfangsfläche mit der inneren Umfangsfläche des Gehäusevorderteils (8) durch die Verschweißung (18) verbunden ist und auf deren zum Druckübertragungselement (12) weisenden Seite des Meßelement (14) angeordnet ist, welches vorzugsweise nach dem piezo-resistiven Meßprinzip arbeitet.

5. Drucksensor nach einem der vorhergehenden Ansprüche,
**dadurch gekennzeichnet,**
**dass** das Gehäusevorderteil (8) im Bereich der Verschweißung (18) mit dem Meßelementträger (16) dünnwandig ist und dass diese Verschweißung (18) durch eine Laserschweißung hergestellt ist.

6. Drucksensor nach einem der vorhergehenden Ansprüche,
**dadurch gekennzeichnet,**
**dass** die Wandung eine die Durchgangsbohrung (2) aufweisende Zentralverschlußschraube (4) einer Kraftstoffeinspritzpumpe beinhaltet.

## Claims

1. Pressure sensor (1) for detecting the pressure of the fuel in a fuel volume, which is bounded by a wall, in the pump operating area of a fuel injection pump, having a housing (8, 24) which is arranged in a passage hole (2) in the wall, comprises a housing front part and a housing rear part that is sealed from the fuel volume by a base (10) against which a pressure transmission element (12) rests on a side facing away from the fuel volume, so that, in operation, it transmits the pressure acting from the fuel on the base (10) to a measurement element (14) which is arranged in the housing (8), and having a measurement element support (16) which is connected to the housing front part (8) by means of a weld (18) and, together with the latter, the measurement element (14) and the pressure transmission element (12), forms a measurement head (6) which is prestressed in a defined manner in the pressure transmission direction, cannot be removed and is held on the housing rear part (24) via an outer flange (20) on the housing front part (8),
**characterized**
**in that** the outer flange (20) is arranged on the outer circumference of the housing front part (8) and, in order to support the measurement head (6), is clamped in the passage hole (2) between a step (22), which reduces the diameter of the passage hole (2) and has a circumferential sealing blade (34), and the housing rear part (24), which is screwed into the passage hole (2) in the wall, and the base of the housing front part (8) is formed by a diaphragm (10) which is welded to the housing front part (8), with the wall thickness of the diaphragm (10) being small in comparison to the wall thickness of the housing front part (8).

2. Pressure sensor according to Claim 1,
**characterized**
**in that** the housing rear part (24) has an external thread (26), which is screwed into an internal thread in the passage hole (2) and is arranged at an axial distance from the measurement head (6).

3. Pressure sensor according to one of Claims 1 or 2,
**characterized**
**in that** one end of the housing rear part (24), which points towards the measurement head (6), is designed to be stepped in such a manner that a longer step part (28) is braced against the outer flange (20) of the housing front part (8) and is connected to the outer flange (20) on its radially outer circumferential edge by means of a second weld (30), with the housing rear part (24) and the housing front part (8) overlapping one another in the radial direction, with a radial gap, and a shorter step part (32) of that end of the housing rear part (24) which points towards the measurement head (6) being opposite the end surface of the housing front part (8) with an axial gap.

4. Pressure sensor according to one of the preceding claims,
**characterized**
**in that** the measurement element support is formed by a metal plate (16) whose outer circumferential surface is connected to the inner circumferential surface of the housing front part (8) by means of the weld (18), and on whose side pointing towards the pressure transmission element (12) the measurement element (14) is arranged, which preferably operates on the piezoresistive measurement principle.

5. Pressure sensor according to one of the preceding claims,
**characterized**
**in that** the housing front part (8) has a thin wall in the region of the weld (18) to the measurement element support (16), and in that this weld (18) is produced by laser welding.

6. Pressure sensor according to one of the preceding claims,
**characterized**
**in that** the wall contains a central sealing screw (4), in which the passage hole (2) is located, for a fuel injection pump.

## Revendications

1. Capteur de pression (1) pour détecter la pression du carburant dans un volume de carburant délimité par une paroi dans la chambre de travail d'une pompe d'injection de carburant comprenant
un boîtier (8, 24) formé d'une partie avant logée dans un perçage traversant (2) de la paroi et une partie arrière,
ce boîtier étant fermé par rapport au volume de carburant par un fond (10) et un élément de transmission de pression (12) est appliqué contre la paroi du fond à l'opposé du volume de carburant, pour transmettre la pression exercée par le carburant sur le fond (10) pendant le fonctionnement, à un élément de mesure (14) logé dans le boîtier (8) et
un support d'élément de mesure (16) relié à la partie avant (8) du boîtier par une soudure (18) et formant avec celui-ci l'élément de mesure (14) et l'élément de transmission de pression (12), une tête de mesure (6) non démontable précontrainte de manière définie dans la direction de transmission de la pression,
cette tête de mesure (6) étant tenue dans la partie arrière (24) du boîtier par une bride extérieure (20) de la partie avant (8) du boîtier,
**caractérisé en ce que**
la bride extérieure (20) est prévue à la périphérie extérieure de la partie avant (8) du boîtier et
pour le montage de la tête de mesure (6) dans le perçage traversant (2) la bride extérieure est serrée entre un épaulement (22) diminuant le diamètre du perçage traversant (2) et comportant une arête d'étanchéité (34) périphérique, et la pièce arrière (24) vissée dans le perçage traversant (2) et
le fond de la partie avant (8) du boîtier est constitué par une membrane (10) soudée à la partie avant (8) du boîtier,
l'épaisseur de la paroi de la membrane (10) étant petite par rapport à l'épaisseur de la paroi de la partie avant (8) du boîtier.

2. Capteur de pression selon la revendication 1,
**caractérisé en ce que**
la partie arrière (24) du boîtier comporte un filetage extérieur (26) vissé dans le filetage intérieur du perçage traversant (2),
le filetage extérieur étant prévu à une distance axiale de la tête de mesure (6).

3. Capteur de pression selon l'une des revendications 1 ou 2,
**caractérisé en ce que**
l'extrémité de la partie arrière (24) du boîtier tournée vers la tête de mesure (6) est étagée de façon qu'une partie longue (28) soit serrée contre la bride extérieure (20) de la partie avant (8) du boîtier et soit reliée à la bride extérieure (20) au niveau de son bord périphérique radial extérieur par une seconde soudure (30),
la partie arrière (24) et la partie avant (8) du boîtier se chevauchant dans la direction radiale avec une distance radiale et une partie étagée (32), plus courte, de l'extrémité de la partie arrière (24) du boîtier, tournée vers la tête de mesure (6), est en regard de la surface frontale de la partie avant (8) du boîtier avec une distance axiale.

4. Capteur de pression selon l'une quelconque des revendications précédentes,
**caractérisé en ce que**
le support de l'élément de mesure est constitué par une plaque métallique (16) dont la surface périphérique extérieure est reliée à la surface périphérique intérieure de la partie avant (8) du boîtier par une soudure (18) et il est prévu sur le côté de l'élément de mesure (14) non tourné vers l'élément de transmission de pression (12), l'élément de mesure fonctionnant de préférence selon le principe de mesure piézo-résistant.

5. Capteur de pression selon l'une quelconque des revendications précédentes,
**caractérisé en ce que**
la partie avant (8) du boîtier a une paroi mince dans la zone de la soudure (18) avec le support (16) de l'élément de mesure et cette soudure (18) est une soudure par laser.

6. Capteur de pression selon l'une quelconque des revendications précédentes,
**caractérisé en ce que**
la paroi comporte la vis de fermeture centrale (4) d'une pompe d'injection de carburant, cette vis ayant un perçage traversant (2).
